Europäisches Patentamt

European Patent Office

Office européen des brevets

(19)

(11) **EP 0 991 722 B1**

(12) **EUROPEAN PATENT SPECIFICATION**

(45) Date of publication and mention
of the grant of the patent:
**22.08.2001 Bulletin 2001/34**

(21) Application number: **98929903.7**

(22) Date of filing: **16.06.1998**

(51) Int Cl.[7]: **C08L 77/00**, C08L 67/02

(86) International application number:
**PCT/NL98/00346**

(87) International publication number:
**WO 98/58023 (23.12.1998 Gazette 1998/51)**

(54) **FLAME-RETARDANT POLYMER COMPOSITION**

FEUERFESTE POLYMERZUSAMMENSETZUNG

COMPOSITION POLYMERE IGNIFUGE

(84) Designated Contracting States:
**CH DE FR GB IT LI NL**

(30) Priority: **18.06.1997 NL 1006347**

(43) Date of publication of application:
**12.04.2000 Bulletin 2000/15**

(73) Proprietor: **DSM N.V.**
**6411 TE Heerlen (NL)**

(72) Inventors:
• **CREVECOEUR, Guido**
**NL-5643 TE Eindhoven (NL)**
• **KORBEE, Roland, Alexander**
**NL-6133 VR Sittard (NL)**
• **HULSKOTTE, Richerdes, Johanna, Mathilda**
**NL-6365 CT Schinnen (NL)**

(56) References cited:
**EP-A- 0 288 269          WO-A-95/18178**

• **PATENT ABSTRACTS OF JAPAN vol. 012, no. 433 (C-543), 15 November 1988 & JP 63 161056 A (JAPAN SYNTHETIC RUBBER CO LTD), 4 July 1988 cited in the application**

**Description**

The invention relates to a flame-retardant polymer composition comprising

(a) at least one condensation polymer and
(b) a halogen-containing styrene polymer.

Such compositions are commonly known and are widely used in, for example, electrical and electronic components. A drawback of the use of halogen-containing styrene polymers as flame retardants in a polymer composition is that the toughness is low. The toughness is expressed as the product of the tensile strength and the elongation at break. This characterisation is preferable to impact resistance because the latter does not discriminate in the case of glass-fibre-reinforced materials. The low toughness of such compositions is for example evident from the data in Table I in WO-A-9518178. The halogen-containing styrene polymer is partly replaced by magnesium oxide or magnesium hydroxide to improve the composition's toughness. The maximum value of the elongation at break of the glass-fibre-reinforced polyamide composition containing a halogen-containing polystyrene and magnesium hydroxide disclosed in WO-A-9518178 is however still only 1.87%, which is insufficient for most applications.

In electronics applications in particular, such as plug connections and snap-fit connections, in which for example the insertion of the pins during the production process results in temporary deformation, this is a serious drawback.

An additional drawback of the use of halogen-containing styrene polymers as flame retardants in thermoplastic polyesters is that the flame retardancy is limited. A glass-fibre-reinforced polybutylene terephthalate composition containing a bromine-containing polystyrene and antimony trioxide classifies only as V-2 according to Standard UL-94.

The invention aims to provide a flame-retardant polymer composition with improved toughness and/or improved flame-retardancy.

This aim is achieved in that the polymer composition also contains

(c) a polymer derived from an aromatic vinyl monomer containing functional groups that can react with the condensation polymer and
(d) elastomeric polymer segments.

Examples of suitable condensation polymers are polyamides and/or thermoplastic polyesters. The invention also covers polyamides obtained via ring-opening polymerisation.

It has been found that, if the condensation polymer is a polyamide, the toughness of the polyamide composition according to the invention is substantially increased and the burning times are further reduced. It has been found that if the condensation polymer is a thermoplastic polyester, for example polybutylene terephthalate, the flame retardancy of the composition according to the invention is substantially improved. The burning times are substantially reduced and a V-0 classification according to UL-94 can be obtained with the composition according to the invention.

A high toughness is advantageous in that the risk of for example an electrical or electronic component made from the polymer composition of the invention fracturing during for example the production process or during the use of the component is substantially reduced. Improved flame retardancy may offer advantages because the mechanical properties of the composition, in particular the toughness, can then be improved even further. Another advantage is that the material costs can consequently be substantially reduced.

A composition containing nylon 4.6, a flame retardant including halogenated polystyrene and a styrene polymer modified with functional radicals chosen from the group comprising carboxyl, acid anhydride, epoxy, hydroxy and/or amine radicals is known from JP-A-63161056, but unlike the polymer composition according to the invention, the nylon 4.6 composition of JP-A-63161056 contains no elastomeric polymer segments. The styrene polymer modified wich functional radicals is moreover used to improve the strength of the weld line.

Examples of aromatic vinyl monomers are styrene and α-alkylstyrene, for example α-methylstyrene. Styrene is preferable.

Functional groups that can react with the condensation polymer can react with the condensation groups and end groups of the polymer. Functional groups that can react with polyamide can react with the amine end groups, the carboxylic acid end groups and the amide groups. Amine end groups are generally far more reactive than carboxylic acid end groups and amide groups. Functional groups that can react with polyester can react with the hydroxyl end groups and the carboxylic acid groups. Functional groups that can react with polyamide or polyester can be chosen from the group comprising alcohol, carboxyl, oxycarbonyl, acid anhydride, acid imide, amine, isocyanate, epoxy, oxazoline, carbodiimide and/or acid halide groups. The epoxide and acid anhydride groups are preferable because of the high reaction rate of these groups.

In the composition of the invention, (c) may be a copolymer or a graft copolymer. (c) can for example be prepared using a process known to a person skilled in the art for the copolymerisation of at least an aromatic vinyl monomer and an unsaturated monomer containing functional groups that can react with the condensation polymer. Such a process is for example described in US-A-2769804, US-A-2971939 and US-A-3509110. (c) can for example also be prepared using common graft copolymerisation processes, for example by grafting a polymer derived from an aromatic vinyl monomer with a (polymerisable) unsaturated monomer containing functional groups that can react with the condensation polymer.

Unsaturated monomers containing carboxyl, oxycarbonyi, acid anhydride and/or acid imide groups can be chosen from the group comprising ethylenically unsaturated (di)carboxylic acids, ethylenically unsaturated carboxylic anhydrides, imides of ethylenically unsaturated dicarboxylic acids, derivatives thereof and mixtures of these compounds. 'Derivatives' are for example understood to be esters of alcohols with 1 to 20 carbon atoms and metal salts. Examples of suitable ethylenically unsaturated carboxylic acids are acrylic acid, methacrylic acid and vinyl benzoic acid. Examples of suitable ethylenically unsaturated dicarboxylic acids are maleic acid, fumaric acid, itaconic acid, citraconic acid, tetrahydrophthalic acid and vinyl phthalic acid. Examples of suitable ethylenically unsaturated dicarboxylic anhydrides are maleic anhydride, fumaric anhydride, itaconic anhydride, citraconic anhydride, tetrahydrophthalic anhydride, alkenyl succinic anhydride, such as butenyl succinic anhydride and 2,9-decadienyl succinic anhydride. Maleic anhydride and fumaric anhydride are preferable. Maleic anhydride is the most preferable. Examples of suitable esters of the aforementioned compounds containing alcohols with 1 to 20 carbon atoms are R esters of acrylic acid and methacrylic acid, R monoesters of maleic acid, fumaric acid, itaconic acid, citraconic acid, tetrahydrophthalic acid, vinyl phthalic acid and alkenyl succinic acid. R is for example methyl, ethyl, propyl, isopropyl, butyl, isobutyl, hexyl, cyclohexyl, octyl, 2-ethylhexyl and decyl. Examples of suitable imides of the aforementioned dicarboxylic acids are maleic imide, phenyl maleimide, fumaric imide, itaconic imide and citraconic imide.

Unsaturated monomers containing epoxide groups may be monoepoxides or diepoxides. Monoepoxides are preferable. Monoepoxides can be chosen from the group comprising epoxyalkenes, unsaturated glycidyl esters and unsaturated glycidyl ethers. Examples of suitable compounds are glycidyl methacrylate, glycidyl acrylate, allyl glycidyl ether, vinyl glycidyl ether and glycidyl itaconate.

The amount of incorporated monomer containing functional groups present in (c) may vary within a wide range and is dependent on the reactivity of the functional groups and their compatibility in the composition. The amount is for example between 0.1 and 30 wt.% (relative to (c)). If the amount is less than 0.1 wt.% the effect is too small; if the amount is more than 30 wt.% crosslinking of the polyamide may occur. What amount is the most preferable must be determined for each case separately. The amount will generally preferably be 2 to 15 wt.%, 2 to 12 wt.% being the most preferable.

Examples of (c) in the composition in the invention are styrene maleic anhydride, styrene acrylic acid, styrene phenyl maleimide and styrene glycidyl methacrylate copolymer. Preferably styrene maleic anhydride is used as (c) in the polyamide composition according to the invention. The concentration of maleic anhydride in the styrene maleic anhydride may vary within a wide range, for example between 2 and 25 wt.%, and preferably lies between 3 and 15 wt.%.

'Soft' or 'elastomeric' polymer segments (d) are in the context of this application understood to be polymer segments having a glass transition temperature ($T_g$) lower than 0°C, preferably lower than -20°C and most preferably lower than -40°C. Examples of suitable elastomeric polymer segments are to be found in conjugated 1,3-diene rubbers, copolymers of ethylene and at least one $C_3$-$C_8$ α-olefin, copolymers of acrylonitrile and butadiene, styrene-butadiene block copolymers, acrylate-butadiene rubbers, butyl rubbers and/or polysiloxanes. Other polymers with a glass transition temperature lower than 0°C, for example polyalkenes and polyoxylalkenes such as polyisobutene, polyethylene, polyoxymethylene, polyethylene oxide and polybutylene oxide, can also be used as (d)-cortaining component in the composition of the invention.

Examples of suitable conjugated 1,3-diene rubbers are homopolymers of conjugated dienes such as butadiene (butadiene rubber), isoprene (isoprene rubber), chloroprene and piperylene. 'Butadiene rubber' is generally understood to be the 1,4-polymerisation product of butadiene in which the cis configuration dominates. In the preparation of cis-1,4-polybutadiene trans-structure and 1,2-addition generally always occur, while there are also catalyst systems that lead to a predominantly trans configuration. 'Isoprene rubber' is understood to be homopolymers of isoprene prepared with the aid of stereospecific catalysts. The isoprene rubbers are generally a mixture of cis-1,4-polyisoprene and 3,4-polyisoprene and optionally trans1,4-polyisoprene.

'Copolymers of ethylene and at least one $C_3$-$C_8$ α-olefin' are understood to include the copolymers of ethylene, at least one $C_3$-$C_8$ α-olefin and at least one non-conjugated diene. The α-olefin is preferably propylene, but it may also be 1-butene, 1-pentene, 1-hexene or mixtures thereof. A suitable non-conjugated diene is a linear, aliphatic diene with at least 6 carbon atoms and with either two terminal double bonds or one terminal double bond and one internal double bond. Another suitable non-conjugated diene is a cyclic diene with one or both double bonds forming part of the cyclic ring. Examples of suitable non-conjugated dienes are dicyclopentadiene, 1,4-hexadiene, 1,5-cyclooctadiene and 5-ethylidene-2-norbornene. The copolymers of ethylene and propylene are often abbreviated to EPM and EPDM according to the ASTM nomenclature.

Styrene-butadiene block copolymers are generally prepared by means of emulsion or solution copolymerisation of about three parts butadiene and one part styrene.

'Butyl rubber' is generally understood to be a copolymer of isobutene and 0.6 to 3 mole percent isoprene.

An example of a polysiloxane is polydimethylsiloxane.

These soft polymer segments (d) may be present in the polymer composition of the invention as separate polymers or they may be incorporated in (c). Preferably (d) is incorporated in (c) as a copolymer component. Elastomeric-polymer-segments-containing copolymers of aromatic vinyl monomers and ethylenically unsaturated monomers containing functional groups that can react with the condensation polymer are examples of this preferred embodiment. Another example are copolymers, modified with an aromatic vinyl polymer, of (d) and ethylenically unsaturated monomers containing functional groups that can react with the condensation polymer. Another example are thermoplastic, vinylaromatic-monomer-containing elastomers containing functional groups that can react with the condensation polymer.

Elastomeric-polymer-segments-containing copolymers of aromatic vinyl monomers and ethylenically unsaturated monomers containing functional groups that can react with the condensation polymer are preferably elastomeric-polymer-segments-containing copolymers of aromatic vinyl monomers and ethylenically unsaturated monomers containing carboxyl, oxycarbonyl, acid anhydride and/or acid imide groups, for example styrene-maleic anhydride copolymers (SMA). Suitable elastomeric polymer segments are for example present in diene rubbers as defined above. Diene rubbers comprising at least 50 wt.% of a conjugated diene are preferable. Examples are homopolymers of conjugated dienes such as butadiene, isoprene, chloroprene and piperylene and copolymers thereof containing one or more copolymerisable ethylenically unsaturated monomers such as styrene, methylstyrene, acrylonitrile, methacrylonitrile and isobutene. The amount of elastomeric polymer segments in the elastomeric-polymer-segments-containing copolymer will generally lie between 5 and 75 wt.% (relative to the elastomeric-polymer-segments-containing copolymer). The commercially available Dylark 250, a polybutadienerubber-containing SMA, has proved to be particularly suitable in the composition of the invention.

Examples of copolymers, modified with a vinyl aromatic polymer, of (d) and ethylenically unsaturated monomers containing functional groups that can react with the condensation polymer are polystyrene-modified copolymers of an alkene, such as ethylene, and an ethylenically unsaturated monomer containing functional groups. The commercially available Modiper A-4100, a random copolymer of ethylene and glycidyl methacrylate grafted with polystyrene, has proved to be particularly suitable in the composition of the invention.

Thermoplastic-vinyl-aromatic-monomercontaining elastomers containing functional groups that can react with the condensation polymer are generally thermoplastic elastomers modified with those functional groups. Modified thermoplastic elastomers can be prepared using processes known to a person skilled in the art, for example by grafting an unsaturated monomer containing those functional groups onto a suitable thermoplastic elastomer at an elevated temperature and/or in the presence of a radical initiator such as an organic peroxide. Common processes are for example described in US-A-4427828 and US-A-4578429. The functional groups are chosen from the group of functional groups defined above.

Thermoplastic elastomers that are suitable for the invention are generally A-B-A block copolymers of a glassy or crystalline polymer A and a soft polymer B, polymer A being a polymer derived from an aromatic vinyl monomer and polymer B containing the elastomeric polymer segments (d). Examples of soft polymers B are polybutadiene, polyisoprene, polyalkenes and polydimethylsiloxane. Examples of thermoplastic elastomers are styrene-butadiene-styrene, styreneisoprene-styrene, styrene-alkene-styrene block copolymers. Examples of styrene-alkene-styrene block copolymers are styrene-ethylene/butene-styrene block copolymers and styrene-ethylene-butadiene copolymers. For a more detailed description of these thermoplastic elastomers and their preparation see 'Encyclopedia of Polymer Science and Engineering', Volume 5, pages 416-430, and the references given therein.

The total concentration of (c) and (d) in the composition of the invention lies between 0.1 and 20 wt.% (relative to the composition), preferably between 0.5 and 10 wt.%.

The concentration of (d) in the composition of the invention generally lies between 5 and 75 wt.% (relative to (c) + (d)), preferably the concentration of (d) is chosen to be as low as possible.

In the composition of the invention, (a) is preferably a homopolyamide, a copolyamide, a thermoplastic homopolyester, a thermoplastic copolyester or a mixture hereof.

The thermoplastic homo- and copolyesters can be obtained through self-polycondensation of hydroxycarboxylic acids or through polycondensation of one or more alkylene glycols and one or more dicarboxylic acids, preferably aromatic dicarboxylic acids. The aromatic dicarboxylic acids are preferably chosen from the group comprising phthalic acids, for example iso- and terephthalic acid, naphthalene dicarboxylic acids, for example 2,6-naphthalene dicarboxylic acid and diphenyl dicarboxylic acids, for example 4,4'-diphenyldicarboxylic acid. Terephthalic acid is very suitable. The thermoplastic polyester is preferably polyethylene terephthalate, PET, or polybutylene terephthalate, PBT. Other thermoplastic polyesters that are very suitable for use in the composition according to the invention are polyalkylene adipates; poly ($\varepsilon$-caprolactone); polyethylene naphthalate, PET; copolyesters of ethylene glycol, terephthalic acid and isophthalic acid and copolyesters of ethylene glycol, 2,6-naphthalene dicarboxylic acid and 4,4'-diphenyl dicarboxylic acid. For a more detailed description of these polyesters and their preparation see 'Encyclopedia of Polymer Science and Engineering', Volume 12, pages 1-75, and the references given therein.

The invention is particularly effective for a composition in which the polyamide has a melting point higher than about 280°C. Examples of such polyamides with high melting points are the aliphatic polyamide 4.6, polytetramethylene adipamide, the semi-aromatic (co)polyamides that contain units derived from at least one aromatic dicarboxylic acid, for example terephthalic or isophthalic acid or naphthalene dicarboxylic acid, and an aliphatic or cycloaliphatic diamine and optionally an aliphatic dicarboxylic acid and an aliphatic or cycloaliphatic diamine, and polyamides containing units derived from an aliphatic diamine and a cycloaliphatic dicarboxylic acid. Examples of such semi-aromatic copolyamides are polyamide 6.T, polyamide 6/6.T, polyamide 6.I/6.T/2MP.T or polyamide 6/6.6/6.T, in which T = terephthalic acid, I = isophthalic acid and 2MP.T = 2-methylpentamethylene terephthalic diamide. Such semi-aromatic (co)polyamides are commercially available under various tradenames.

In the composition according to the invention, (b) is a halogen-containing styrene polymer. Examples of halogens are bromine and chlorine. Bromine-containing styrene polymers are preferable. The bromine-containing styrene polymers can be obtained by brominating polystyrene or by polymerising brominated styrene monomer. Examples of polymers of brominated styrene monomers, hereinafter to be referred to as polybromostyrene, are poly(monobromostyrene), poly(dibromostyrene) and poly(tribromostyrene) or mixtures thereof. Polybromostyrene is preferable to brominated polystyrenes in view of the substantially lower corrosiveness of polybromostyrene. Polymerised dibromostyrene (polydibromostyrene), which is available under the tradename PDBS[R], is the most preferable.

The polybromostyrene can be obtained by polymerising bromostyrene monomer or bromostyrene oligomer. The polybromostyrene can for example be obtained using the process described in US-A-5369202.

The concentration of halogen-containing styrene polymer (b) in the composition of the invention may vary within a wide range and is in principle primarily determined by the desired level of flame retardancy and the mechanical properties of the composition. In general the concentration will be between 1 and 40 wt.%, preferably between 2 and 30 wt.% of the composition.

The flame retardancy of the composition can be further increased by the presence of a second flame-retardant component. In theory, all known substances that increase the effect of halogen-containing flame retardants are suitable for this. Examples are antimony oxide, preferably antimony trioxide, alkaline earth metal oxides, for example magnesium oxide and other metal oxides, for example alumina, silica, iron oxide and manganese oxide, metal hydroxides, for example aluminium hydroxide, metal borates, for example zinc borate, and phosphorus-containing compounds. Their concentration may vary within a wide range, but is generally not more than the concentration of the halogen-containing styrene polymer.

In practice the composition will generally contain reinforcing materials, for example glass fibres, for use in the electronics industry. The glass fibre concentration may vary within a wide range and is partly determined by the level of mechanical properties desired. In general the glass fibre content will not exceed 80 parts by weight per 100 parts by weight of

$$(a) + (b) + (c) + (d).$$

The composition may additionally contain the other usual additives, for example stabilisers, mould-release agents, plasticisers, colourants such as pigments, inorganic fillers, for example mica, chalk and clay and nucleating agents such as talcum, in the amounts that are generally applicable for these additives providing the properties are not adversely affected. The concentration of the other additives will generally not exceed 60 parts by weight per 100 parts by weight of (a) + (b) + (c) + (d).

A special embodiment of the invention is a flame-retardant polymer composition containing at least one condensation polymer (a), a halogen-containing styrene polymer (b) and a polymer of an aromatic vinyl monomer and elastomeric polymer segments (d).

In this embodiment the copolymer will be situated around and/or in (b). It has been found that a composition according to this special embodiment shows improved toughness relative to the known composition without the copolymer. Examples of such copolymers are acrylonitrile-butadienestyrene and styrene-alkylene-styrene copolymers, for example styrene-ethylene-butadiene-styrene block copolymers.

In general the flame-retardant polymer composition according to the invention will lie within the following ranges:

(a) 20-98.9 wt.% condensation polymer,
(b) 1-40 wt.% halogen-containing styrene polymer,
(c)+(d) 0.1-20 wt.% of a polymer derived from an aromatic vinyl monomer, optionally containing functional groups that can react with the condensation polymer, and elastomeric polymer segments,

$$(a) + (b) + (c) + (d) = 100\%$$

(e) 0-40 parts by weight of a compound that increases the flame retardancy (relative to 100 parts by weight of (a) + (b) + (c) + (d)),
(f) 0-80 parts by weight of glass-fibre reinforcement (relative to 100 parts by weight of (a) + (b) + (c) + (d))
(g) 0-60 parts by weight of other additives (relative to 100 parts by weight of (a) - (b) + (c) + (d)).

The composition according to the invention can be prepared with the aid of the conventional techniques known per se, by for example mixing all or some of the components in dry condition in a tumbler mixer, followed by melting in a melt mixer, for example a Brabender mixer or a single- or twin-screw extruder. Preferably use is made of a twin-screw extruder.

Preferably (a) + (b) + (c) + (d) are dosed to the extruder's feed opening together, so as to obtain a good dispersion of (b), (c) and (d) in (a). Components (b), (c) and (d) may be mixed in the form of powder or granules before being introduced into the extruder or they can be mixed in the melt to form a compound.

The different components of the composition can also be dosed at different points in the extruder. When the composition contains glass fibres, they are preferably not dosed to the extruder's feed opening, so as to prevent the risk of the glass fibres breaking. Some of the components, for example colourants and stabilisers, can be added in the form of a masterbatch in the condensation polymer or a different polymer.

The invention will be elucidated by means of the non-limiting examples presented below.

Examples I-VII and Comparative Experiments A-C

The compositions listed in Table I were prepared in a Werner and Pfleiderer ZSK-25/38D twin-screw extruder. The extruder's settings were: 250 rpm, barrel temperature 300°C, throughput 18 kg/h.

Nylon 4.6 was dried at 105°C for 24 hours in a vacuum and in a nitrogen atmosphere.

The various components were dosed to the extruder via the hopper. Glass fibre was fed to the melt via side dosage. The extrusion was carried out in a nitrogen atmosphere.

The dried compositions obtained were used to injection-mould rod specimens (ISO 527, type 1) with thicknesses of 1.6 mm and 0.8 mm, respectively, using an Arburg 4 injection-moulding machine, to test the flame retardancy according to UL-94. Injection-moulding conditions: melt temperature 300-310°C, mould temperature 120°C, injection pressure 4.5 MPa and injection speed 130 mm/s.

Table 1

| | | Comp. Exp. A | Comp. Exp. B | Ex. I | Comp. Exp. C | Ex. II | Ex. III | Ex. IV | Ex. V | Ex. VI | Ex. VII |
|---|---|---|---|---|---|---|---|---|---|---|---|
| Polyamide 4,6[1] | wt.% | 70 | 65 | 65 | 40.95 | 38.95 | 37.45 | 37.45 | 37.45 | 37.45 | 37.45 |
| Glass fibre | wt.% | | | | 30 | 30 | 30 | 30 | 30 | 30 | 30 |
| Polybromostyrene[2] | wt.% | 30 | 30 | 30 | 21.25 | 21.25 | 21.25 | 19.75 | 16.75 | 22.25 | 21.25 |
| $Sb_2O_3$ masterbatch[3] | wt.% | | | | 7.8 | 7.8 | 7.8 | 7.8 | 7.8 | 7.8 | 7.8 |
| Dylark 232[4] | wt.% | | 5 | | | | | | | | |
| Dylark 250[5] | wt.% | | | 5 | | 2 | 3.5 | 5 | 8 | | |
| Ronfalin TZ 270[6] | wt.% | | | | | | | | | 3.5 | |
| Kraton G 1652[7] | wt.% | | | | | | | | | | 3.5 |
| E-Modulus[8] | MPa | 3800 | 4300 | 4100 | 12100 | 11946 | 12022 | 11626 | 11334 | 11410 | 11410 |
| tensile strength[8] | MPa | 77 | 77 | 75 | 183 | 189 | 186 | 186 | 185 | 172 | 172 |

| | | Comp. Exp. A | Comp. Exp. B | Ex. I | Comp. Exp. C | Ex. II | Ex. III | Ex. IV | Ex. V | Ex. VI | Ex. VII |
|---|---|---|---|---|---|---|---|---|---|---|---|
| elongation at break[8] | % | 3.8 | 3.5 | 4.2 | 1.9 | 2.41 | 2.25 | 2.29 | 2.31 | 2.31 | 2.29 |
| toughness | | 293 | 270 | 315 | 348 | 455 | 419 | 426 | 427 | 397 | 394 |
| UL-94 | | | | | V-O (1.6 mm) | V-O (0.8 mm) | V-O (0.8 mm) | V-O (0.8 mm) | V-O (0.8 mm) | V-O (0.8 mm) | |
| average first burning time (s) second burning time (s) | | | | | 6 2 | 1 1 | 1 1 | 1 1 | 1 1 | | |

1)      Stanyl KS 200[R] from DSM, the Netherlands

2)      PDBS 80[R] from Great Lakes; polymerised brominated styrene containing 58 wt.% Br

3)      Antimony trioxide masterbatch in polyamide-6 (80/20)

4)      Dylark 232[R] from Arco; styrene-maleic anhydride copolymer containing 7.5 wt.% maleic anhydride, $M_w$ = 360,000 g/mol

5)      Dylark 250[R] from Arco; a polybutadiene-rubber-modified styrene maleic anhydride SMA containing approximately 8 wt.% maleic anhydride; styrene maleic anhydride containing 7.5 wt.% maleic anhydride, and 10 wt.% polybutadiene rubber onto which approximately 12 wt.% maleic anhydride has been grafted

6)      Ronfalin TZ 270, an experimental ABS grade from DSM containing 60 wt.% polybutadiene; the styrene acrylonitrile contains 25 wt.% acrylonitrile, about half of which has been grafted onto the polybutadiene

7)      Kraton G 1652[R] from Shell, a styrene-ethylene-butadiene-styrene block copolymer containing 28.8 wt.% polystyrene; the molecular weights of the styrene and ethylene butadiene blocks are 7000 and 35000 g/mol, respectively; Brookfield viscosity in toluene at 25°C = 1350 cps

8)      ISO 527

The table shows that the composition according to the invention retains the V-0 classification, but the burning times of the composition according to the invention are reduced relative to the known composition. Surprisingly, the flame retardancy of compositions does not deteriorate when the polybromostyrene content decreases.

Attention is drawn to the fact that the composition according to the invention with only a few elastomeric polymer segments (d) (the composition of Example II contains only 0.2 wt.% polybutadiene) shows a substantial improvement of the toughness while the stiffness remains virtually constant.

Examples VIII and IX and Comparative Experiment D

The compositions listed in Table II were prepared in a Werner and Pfleiderer ZSK 30/33 twin-screw extruder. The extruder settings were: 200 rpm, barrel temperature 250°C, throughput 12 kg/h.

The various components were dried for 16 hours at 90°C and fed to the extruder via the hopper. Glass fibre was added to the melt via side dosage.

The dried (at 90°C for 16 hours) compositions obtained were used to injection-mould rod specimens (ISO 527, type 1) for mechanical testing and 1.6-mm-thick rod specimens for testing the flame retardancy according to UL-94 using an Engel 80 E injection-moulding machine. Injection-moulding conditions: barrel temperature 255°C, mould temperature 90°C.

|  |  | Comp. Exp. D | Ex. VIII | Ex. IX |
|---|---|---|---|---|
| PBT[9] | wt.% | 53.9 | 51.9 | 51.9 |
| Glass fibre | wt.% | 30 | 30 | 30 |
| Polybromostyrene[2] | wt.% | 10.5 | 10.5 | 10.5 |
| $Sb_2O_3$ masterbatch[10] | wt.% | 5.6 | 5.6 | 5.6 |
| Dylark 250[5] | wt.% |  | 2 |  |
| Modiper A-4100[11] | wt.% |  |  | 2 |
| UL-94 1.6 mm |  | V-2 | V-0 | V-0 |
| E-modulus[8] | MPa | 11440 | 12100 | 10630 |
| tensile strength[8] | MPa | 138 | 138 | 138 |
| Elongation at break[8] | % | 1.9 | 2.0 | 2.1 |

9) PBT 5007, polybutylene terephthalate from DSM, relative viscosity in m-cresol = 2.0

10) Antimony trioxide masterbatch in PBT (80/20)

11) Modiper A-4100 from Nippon Oil & Fats, 70 wt.% random copolymer of ethylene and glycidyl methacrylate (85/15) onto which 30 wt.% polystyrene has been grafted.

In the UL-94 test the 1.6-mm rod specimens of the composition of Comparative Experiment D stopped burning 8-9 s. after the application of the second flame as a result of a falling burning drop of polymer. The compositions of Examples VIII and IX were classified as V-0.

This shows that the flame retardancy of the composition according to the invention improves substantially and the toughness remains virtually constant.

**Claims**

1.  Flame-retardant polymer composition comprising

    (a) at least one condensation polymer,
    (b) a halogen-containing styrene polymer, characterised in that the polymer composition also contains
    (c) a polymer derived from an aromatic vinyl monomer containing functional groups that can react with the condensation polymer and
    (d) elastomeric polymer segments.

2.  Flame-retardant polymer composition according to Claim 1, characterised in that the condensation polymer is a polyamide or a thermoplastic polyester.

3.  Flame-retardant polymer composition according to Claim 1 or Claim 2, characterised in that the aromatic vinyl monomer of (c) is styrene or $\alpha$-methylstyrene.

4.  Flame-retardant polymer composition according to any one of Claims 1-3, characterised in that the functional groups are chosen from the group comprising alcohol, carboxyl, oxycarbonyl, acid anhydride, acid imide, amine, isocyanate, epoxy, oxazoline, carbodiimide and/or acid halide groups.

5. Flame-retardant polymer composition according to any one of Claims 1-4, characterised in that component (c) is a copolymer of an aromatic vinyl monomer and an unsaturated monomer containing functional groups that can react with the condensation polymer.

6. Flame-retardant polymer composition according to any one of Claims 1-5, characterised in that the functional groups are acid anhydride groups.

7. Flame-retardant polymer composition according to Claim 5, characterised in that the unsaturated monomer is maleic anhydride or fumaric anhydride.

8. Flame-retardant polymer composition according to any one of Claims 4-7, characterised in that the amount of incorporated monomer containing functional groups in component (c) lies between 0.1 and 30 wt.% (relative to (c)).

9. Flame-retardant polymer composition according to Claim 5, characterised in that component (c) is styrene maleic anhydride.

10. Flame-retardant polymer composition according to Claim 9, characterised in that the maleic anhydride content of the styrene maleic anhydride is between 3 and 15 wt.%.

11. Flame-retardant polymer composition according to any one of the above Claims, characterised in that the glass transition temperature of the elastomeric polymer segments (d) is lower than-20°C.

12. Flame-retardant polymer composition according to Claim 11, characterised in that the elastomeric polymer segments (d) are present in conjugated 1,3-diene rubbers, copolymers of ethylene and at least one $C_3$-$C_8$ $\alpha$-olefin, copolymers of acrylonitrile and butadiene, styrene-butadiene block copolymers, acrylate-butadiene rubbers, butyl rubbers and/or polysiloxanes.

13. Flame-retardant polymer composition according to any one of the above Claims, characterised in that the elastomeric polymer segments are incorporated in (c).

14. Flame-retardant polymer composition according to Claim 13, characterised in that (c) is an elastomeric-polymer-segments-containing copolymer of an aromatic vinyl monomer and an ethylenically unsaturated monomer containing functional groups that can react with the condensation polymer.

15. Flame-retardant polymer composition according to Claim 13, characterised in that (c) is a copolymer, modified with an aromatic vinyl polymer, of (d) and an ethylenically unsaturated monomer containing functional groups that can react with the condensation polymer.

16. Flame-retardant polymer composition according to Claim 13, characterised in that (c) is a thermoplastic, vinyl-aromatic-monomer-containing elastomer modified with functional groups that can react with the condensation polymer.

17. Flame-retardant polymer composition according to Claim 16, characterised in that the modified thermoplastic elastomer is a modified styrenealkene-styrene block copolymer.

18. Flame-retardant polymer composition according to any one of the above Claims, characterised in that the concentration of (c) and (d) lies between 0.1 and 20 wt.% of (a) + (b) + (c) + + (d).

19. Flame-retardant polymer composition according to Claim 2, characterised in that the polyamide is chosen from the group of polyamides having a melting point of at least 280°C.

20. Flame-retardant polymer composition according to Claim 19, characterised in that the polyamide is chosen from the group comprising aliphatic polyamides with high melting points and semi-aromatic (co)polyamides with high melting points containing units derived from at least one aromatic dicarboxylic acid and an aliphatic or cycloaliphatic diamine.

21. Flame-retardant polymer composition according to Claim 1, characterised in that (b) is chosen from the group of bromine-containing styrene polymers.

**22.** Flame-retardant polymer composition according to Claim 21, characterised in that (b) is polymerised brominated styrene.

**23.** Flame-retardant polymer composition according to Claim 22, characterised in that (b) is polymerised dibromostyrene.

**24.** Flame-retardant polymer composition according to any one of the above Claims, characterised in that a second compound is present that reinforces the flame-retardant effect.

**25.** Flame-retardant polymer composition according to any one of the above Claims, characterised in that the composition also contains glass fibre reinforcement.

**26.** Flame-retardant polymer composition containing at least one condensation polymer (a), a halogen-containing styrene polymer (b) and a copolymer of an aromatic vinyl monomer and elastomeric polymer segments (d).

**27.** Flame-retardant polymer composition containing

(a) 40-98.9 wt.% condensation polymer,
(b) 1-40 wt.% halogen-containing styrene polymer,
(c) + (d) 0.1-20 wt.% of a polymer derived from an aromatic vinyl monomer containing functional groups that can react with the condensation polymer, and elastomeric polymer segments,

$$(a) + (b) + (c) + (d) = 100\%,$$

(e) 0-40 parts by weight of a compound that increases the flame retardancy (per 100 parts by weight of (a) + (b) + (c) + (d)),
(f) 0-80 parts by weight of glass fibre reinforcement (per 100 parts by weight of (a) + (b) + (c) + (d)),
(g) 0-60 parts by weight of other additives (per 100 parts by weight of (a) + (b) + (c) + (d)).

**28.** Process for preparing a flame-retardant polymer composition containing (a) at least one condensation polymer, (b) a halogen-containing styrene polymer, (c) a polymer derived from an aromatic vinyl monomer containing functional groups that can react with the condensation polymer, and (d) elastomeric polymer segments, characterised in that components (b), (c) and (d) are first mixed in the form of a powder or granules and this powder mixture is subsequently mixed with the condensation polymer (a) in an extruder.

**29.** Electronic or electrical component made from a flame-retardant polymer composition according to any one of Claims 1-28 or prepared using the process according to Claim 29.

**Patentansprüche**

**1.** Flammenhemmende Polymerzusammensetzung, umfassend

(a) wenigstens ein Kondensationspolymer und
(b) ein halogenhaltiges Styrolpolymer,
dadurch gekennzeichnet, daß die Polymerzusammensetzung auch
(c) ein Polymer, das von einem aromatischen Vinylmonomer, enthaltend funktionelle Gruppen, welche mit dem Kondensationspolymer reagieren können, abgeleitet ist, und
(d) elastomere Polymersegmente enthält.

**2.** Flammenhemmende Polymerzusammensetzung nach Anspruch 1, dadurch gekennzeichnet, daß das Kondensationspolymer ein Polyamid oder ein thermoplastischer Polyester ist.

**3.** Flammenhemmende Polymerzusammensetzung nach Anspruch 1 oder Anspruch 2, dadurch gekennzeichnet, daß das aromatische Vinylmonomer von (c) Styrol oder α-Methylstyrol ist.

**4.** Flammenhemmende Polymerzusammensetzung nach einem der Ansprüche 1 bis 3, dadurch gekennzeichnet, daß die funktionellen Gruppen aus der Gruppe, umfassend Alkohol, Carboxyl, Oxycarbonyl, Säureanhydrid, Säureimid, Amin, Isocyanat, Epoxy, Oxazolin, Carbodiimid und/oder Säurehalogenidgruppen, gewählt sind.

5. Flammenhemmende Polymerzusammensetzung nach einem der Ansprüche 1 bis 4, dadurch gekennzeichnet, daß Komponente (c) ein Copolymer aus einem aromatischen Vinylmonomer und einem ungesättigten Monomer, enthaltend funktionelle Gruppen, die mit dem Kondensationspolymer reagieren können, ist.

6. Flammenhemmende Polymerzusammensetzung nach einem der Ansprüche 1 bis 5, dadurch gekennzeichnet, daß die funktionellen Gruppen Säureanhydridgruppen sind.

7. Flammenhemmende Polymerzusammensetzung nach Anspruch 5, dadurch gekennzeichnet, daß das ungesättigte Monomer Maleinanhydrid oder Fumar-anhydrid ist.

8. Flammenhemmende Polymerzusammensetzung nach einem der Ansprüche 4 bis 7, dadurch gekennzeichnet, daß die Menge an inkorporiertem Monomer, enthaltend funktionelle Gruppen, in Komponente (c) zwischen 0,1 und 30 Gew.-% (in Bezug auf (c)) liegt.

9. Flammenhemmende Polymerzusammensetzung nach Anspruch 5, dadurch gekennzeichnet, daß Komponente (c) Styrolmaleinanhydrid ist.

10. Flammenhemmende Polymerzusammensetzung nach Anspruch 9, dadurch gekennzeichnet, daß der Maleinanhydridgehalt von Styrolmaleinanhydrid zwischen 3 und 15 Gew.-% liegt.

11. Flammenhemmende Polymerzusammensetzung nach einem der obigen Ansprüche, dadurch gekennzeichnet, daß die Glasübergangstemperatur der elastomeren Polymersegmente (d) niedriger als -20 °C ist.

12. Flammenhemmende Polymerzusammensetzung nach Anspruch 11, dadurch gekennzeichnet, daß die elastomeren Polymersegmente (d) in konjugierten 1,3-Dienkautschuken, Copolymeren aus Ethylen und wenigstens einem $C_3$-$C_8$-$\alpha$-Olefin, Copolymeren aus Acrylnitril und Butadien, Styrol-Butadien-Blockcopolymeren, Acrylat-Butadienkautschuken, Butylkautschuken und/ oder Polysiloxanen vorhanden sind.

13. Flammenhemmende Polymerzusammensetzung nach einem der obigen Ansprüche, dadurch gekennzeichnet, daß die elastomeren Polymersegmente in (c) inkorporiert sind.

14. Flammenhemmende Polymerzusammensetzung nach Anspruch 13, dadurch gekennzeichnet, daß (c) ein elastomere Polymersegmente enthaltendes Copolymer aus einem aromatischen Vinylmonomer und einem ethylenisch ungesättigen Monomer, enthaltend funktionelle Gruppen, welche mit dem Kondensationspolymer reagieren können, ist.

15. Flammenhemmende Polymerzusammensetzung nach Anspruch 13, dadurch gekennzeichnet, daß (c) ein Copolymer, modifiziert mit einem aromatischen Vinylpolymer, von (d) und einem ethylenisch ungesättigten Monomer, enthaltend funktionelle Gruppen, die mit dem Kondensationspolymer reagieren können, ist.

16. Flammenhemmende Polymerzusammensetzung nach Anspruch 13, dadurch gekennzeichnet, daß (c) ein thermoplastisches, vinylaromatisches Monomer ent-haltendes Elastomer ist, das mit funktionellen Gruppen, die mit dem Kondensationspolymer reagieren können, modifiziert ist.

17. Flammenhemmende Polymerzusammensetzung nach Anspruch 16, dadurch gekennzeichnet, daß das modifizierte, thermoplastische Elastomer ein modifiziertes Styrol-Alken-Styrol-Blockcopolymer ist.

18. Flammenhemmende Polymerzusammensetzung nach einem der obigen Ansprüche, dadurch gekennzeichnet, daß die Konzentration von (c) und (d) zwischen 0,1 und 20 Gew.-% von (a) + (b) + (c) + (d) liegt.

19. Flammenhemmende Polymerzusammensetzung nach Anspruch 2, dadurch gekennzeichnet, daß das Polyamid aus der Gruppe von Polyamiden, die einen Schmelzpunkt von wenigstens 280 °C aufweisen, gewählt ist.

20. Flammenhemmende Polymerzusammensetzung nach Anspruch 19, dadurch gekennzeichnet, daß das Polyamid aus der Gruppe, umfassend aliphatische Polyamide mit hohen Schmelzpunkten und semi-aromatische (Co)Polyamide mit hohen Schmelzpunkten, enthaltend Einheiten, die von wenigstens einer aromatischen Dicarbonsäure und einem aliphatischen oder cycloaliphatischen Diamin abgeleitet sind, gewählt ist.

21. Flammenhemmende Polymerzusammensetzung nach Anspruch 1, dadurch gekennzeichnet, daß (b) aus der Gruppe von bromhaltigen Styrolpolymeren gewählt ist.

22. Flammenhemmende Polymerzusammensetzung nach Anspruch 21, dadurch gekennzeichnet, daß (b) polymerisiertes, bromiertes Styrol ist.

23. Flammenhemmende Polymerzusammensetzung nach Anspruch 22, dadurch gekennzeichnet, daß (b) polymerisiertes Dibromstyrol ist.

24. Flammenhemmende Polymerzusammensetzung nach einem der obigen Ansprüche, dadurch gekennzeichnet, daß eine zweite Verbindung vorhanden ist, welche die flammenhemmende Wirkung verstärkt.

25. Flammenhemmende Polymerzusammensetzung nach einem der obigen Ansprüche, dadurch gekennzeichnet, daß die Zusammensetzung auch Glasfaserverstärkungen enthält.

26. Flammenhemmende Polymerzusammensetzung, enthaltend wenigstens ein Kondensationspolymer (a), ein halogenhaltiges Styrolpolymer (b) und ein Copolymer aus einem aromatischen Vinylmonomer und elastomeren Polymersegmenten (d).

27. Flammenhemmende Polymerzusammensetzung, enthaltend

(a) 40 - 98,9 Gew.-% Kondensationspolymer,
(b) 1 - 40 Gew.-% halogenhaltiges Styrolpolymer,
(c) + (d) 0,1 bis 20 Gew.-% eines Polymers, das von einem aromatischen Vinylmonomer, enthaltend funktionelle Gruppen, die mit dem Kondensationspolymer reagieren können, und elastomeren Polymersegmenten abgeleitet ist,

$$(a) + (b) + (c) + (d) = 100 \%,$$

(e) 0 - 40 Gewichtsteile einer Verbindung, welche die Flammschutzeigenschaft erhöht (pro 100 Gewichtsteile von (a) + (b) + (c) + (d)),
(f) 0 - 80 Gewichtsteile Glasfaserverstärkung (pro 100 Gewichtsteile von (a) + (b) + (c) + (d)) und
(g) 0 - 60 Gewichtsteile von anderen Additiven (pro 100 Gewichtsteile von (a) + (b) + (c) + (d)).

28. Verfahren zum Herstellen einer flammenhemmenden Polymerzusammensetzung, enthaltend
(a) wenigstens ein Kondensationspolymer, (b) ein halogenhaltiges Styrolpolymer, (c) ein Polymer, das von einem aromatischen Vinylmonomer, enthaltend funktionelle Gruppen, die mit dem Kondensationspolymer reagieren können, abgeleitet ist, und (d) elastomere Polymersegmente,
dadurch gekennzeichnet, daß die Komponenten (b), (c) und (d) zuerst in Form eines Pulvers oder Granulaten gemischt werden und daß diese Pulvermischung nachfolgend mit dem Kondensationspolymer (a) in einem Extruder gemischt wird.

29. Elektronische oder elektrische Komponente, die aus einer flammenhemmenden Polymerzusammensetzung nach einem der Ansprüche 1 bis 28 hergestellt ist oder unter Verwendung des Verfahrens gemäß Anspruch 28 hergestellt ist.

**Revendications**

1. Composition polymère ignifuge comprenant :

(a) au moins un polymère de condensation,

(b) un polymère styrènique halogéné,

caractérisée en ce que la composition polymère contient aussi :

(c) un polymère dérivé d'un monomère vinyl-aromatique contenant des groupes fonctionnels qui peuvent réagir avec le polymère de conden-sation, et

(d) des segments polymères élastomères.

2. Composition polymère ignifuge selon la revendication 1, caractérisée en ce que le polymère de condensation est un polyamide ou un polyester thermo-plastique.

3. Composition polymère ignifuge selon la revendication 1 ou 2, caractérisée en ce que le monomère vinyl-aromatique (c) est le styrène ou l'$\alpha$-méthyl-styrène.

4. Composition polymère ignifuge selon l'une quelconque des revendications 1 - 3, caractérisée en ce que les groupes fonctionnels sont choisis dans le groupe comprenant les groupes alcool, carboxyle, oxycarbonyle, anhydride d'acide, imide d'acide, amine, isocyanate, époxy, oxazoline, carbodiimide et/ou halo-génure d'acide.

5. Composition polymère ignifuge selon l'une quelconque des revendications 1 - 4, caractérisée en ce que le composant (c) est un copolymère d'un mono-mère vinyl-aromatique et d'un monomère insaturé contenant des groupes fonctionnels qui peuvent réagir avec le polymère de condensation.

6. Composition polymère ignifuge selon l'une quelconque des revendications 1 - 5, caractérisée en ce que les groupes fonctionnels sont des groupes anhydride d'acide.

7. Composition polymère ignifuge selon la revendication 5, caractérisée en ce que le monomère insaturé est l'anhydride maléique ou l'anhydride fumorique.

8. Composition polymère ignifuge selon l'une quelconque des revendications 4 - 7, caractérisée en ce que la quantité de monomère incorporé contenant des groupes fonctionnels dans le composant (c) se situe entre 0,1 et 30 % en poids (par rapport à (c)).

9. Composition polymère ignifuge selon la revendication 5, caractérisée en ce que le composant (c) est du styrène-anhydride maléique.

10. Composition polymère ignifuge selon la revendication 9, caractérisée en ce que la teneur en anhydride maléique du styrène- anhydride maléique est comprise entre 3 et 15 % en poids.

11. Composition polymère ignifuge selon l'une quelconque des revendications ci-dessus, caractérisée en ce que la température de transition vitreuse des segments polymères élastomères (d) est inférieure à - 20°C.

12. Composition polymère ignifuge selon la revendication 11, caractérisée en ce que les segments polymères élastomères (d) sont présents dans des caout-choucs de 1,3-diène conjugués, des copolymères d'éthylène et d'au moins une $\alpha$-oléfine en $C_3$-$C_8$, des copolymères d'acrylonitrile et de butadiène, des copolymères séquencés styrène-butadiène, des caoutchoucs acrylate-butadiène, des caoutchoucs butyl et/ou des polysiloxanes.

13. Composition polymère ignifuge selon l'une quelconque des revendications ci-dessus, caractérisée en ce que les segments polymères élastomères sont incorporés dans (c).

14. Composition polymère ignifuge selon la revendication 13, caractérisée en ce que (c) est un copolymère contenant des segments polymères élastomères d'un monomère vinyl-aromatique et d'un monomère à insaturation éthylénique contenant des groupes fonctionnels qui peuvent réagir avec le polymère de condensation.

15. Composition polymère ignifuge selon la revendication 13, caractérisée en ce que (c) est un copolymère, modifié avec un polymère vinyl-aromatique, de (d) et d'un monomère à insaturation éthylénique contenant des groupes fonc-tionnels qui peuvent réagir avec le polymère de condensation.

16. Composition polymère ignifuge selon la revendication 13, caractérisée en ce que (c) est un élastomère contenant le monomère vinyl-aromatique, thermoplastique, modifié par des groupes fonctionnels qui peuvent réagir avec le polymère de condensation.

17. Composition polymère ignifuge selon la revendication 16, caractérisée en ce que l'élastomère thermoplastique modifié est un copolymère séquencé styrène-alkylène-styrène modifié.

18. Composition polymère ignifuge selon l'une quelconque des revendications ci-dessus, caractérisée en ce que la concentration de (c) et (d) se situe entre 0,1 et 20 % en poids de (a) + (b) + (c) + (d).

19. Composition polymère ignifuge selon la revendication 2, caractérisée en ce que le polyamide est choisi dans le groupe des polyamides ayant un point de fusion d'au moins 280°C.

20. Composition polymère ignifuge selon la revendication 19, caractérisée en ce que le polyamide est choisi dans le groupe comprenant les polyamides aliphatiques ayant des points de fusion élevés et les (co)-polyamides semi-aromatiques ayant des points de fusion élevés contenant des motifs provenant d'au moins un acide dicarboxylique aromatique et d'une diamine aliphatique ou cycloaliphatique.

21. Composition polymère ignifuge selon la revendication 1, caractérisée en ce que (b) est choisi dans le groupe des polymères styréniques bromés.

22. Composition polymère ignifuge selon la revendication 21, caractérisée en ce que (b) est un styrène bromé polymérisé.

23. Composition polymère ignifuge selon la revendication 22, caractérisée en ce que (b) est du dibromostyrène polymérisé.

24. Composition polymère ignifuge selon l'une quelconque des revendications ci-dessus, caractérisée en ce qu'un second composé est présent qui renforce l'effet ignifuge.

25. Composition polymère ignifuge selon l'une quelconque des revendications ci-dessus, caractérisée en ce que la composition contient aussi des fibres de verre de renforcement.

26. Composition polymère ignifuge contenant au moins un polymère de condensation (a), un polymère styrènique halogéné (b) et un copolymère d'un monomère vinyl-aromatique et de segments polymères élastomères (d).

27. Composition polymère ignifuge contenant :

(a) 40 - 98,9 % en poids de polymère de condensation,

(b) 1 - 40 % en poids de polymère styrénique halogéné,

(c) + (d) 0,1 - 20 % en poids d'un polymère provenant d'un monomère vinyl-aromatique contenant des groupes fonctionnels qui peuvent réagir avec le polymère de condensation, et des segments poly-mères élastomères,

(a)+(b)+(c)+(d)=100%.

(e) 0 - 40 parties en poids d'un composé qui augmente le retard à la combustion (pour 100 parties en poids de (a) + (b) + (c) + (d)),

(f) 0 - 80 parties en poids de fibres de verre de renforcement (pour 100 parties en poids de (a) + (b) + (c) + (d)),

(g) 0 - 60 parties en poids d'autres additifs (pour 100 parties en poids de (a) + (b) + (c) + (d)).

28. Procédé de préparation d'une composition polymère ignifuge contenant (a) au moins un polymère de condensation, (b) un polymère styrénique halogéné, (c) un polymère provenant d'un monomère vinyl-aromatique contenant des groupes fonctionnels qui peuvent réagir avec le polymère de condensation, et (d) des segments polymères élastomères, caractérisé en ce que les composants (b), (c) et (d) sont d'abord mélangés sous la forme d'une poudre ou de granules et en ce que ce mélange de poudres est ensuite mélangé avec le polymère de condensation (a) dans une extrudeuse.

29. Composant électronique ou électrique fabriqué à partir d'une composition polymère ignifuge selon l'une quelconque des revendications 1 - 28 ou préparé en utilisant le procédé selon la revendication 28.